(19) Europäisches Patentamt / European Patent Office / Office européen des brevets

(11) **EP 3 182 573 A1**

(12) **EUROPEAN PATENT APPLICATION**

(43) Date of publication:
**21.06.2017 Bulletin 2017/25**

(51) Int Cl.:
*H02M 1/34* (2007.01)

(21) Application number: **15306998.4**

(22) Date of filing: **14.12.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **ALCATEL LUCENT**
**92100 Boulogne-Billancourt (FR)**

(72) Inventor: **GLASER, Wolfgang**
**70435 STUTTGART (DE)**

(74) Representative: **Berthier, Karine et al**
**Alcatel-Lucent International**
**148/152, route de la Reine**
**92100 Boulogne-Billancourt (FR)**

(54) **SNUBBER CIRCUITS ADAPTED TO LIMIT ENERGY LEAKING FROM TWO TERMINALS OF A WINDING AND ELECTRONIC CIRCUIT**

(57) Snubber circuit is adapted to limit energy leaking from a first terminal and a second terminal of a winding, and electronic circuit the snubber circuit comprising a first rectifier and a second rectifier and a third rectifier and a first capacitor and a second capacitor. Within the snubber circuit a cathode of first rectifier is connected to the first terminal. Within the snubber circuit an anode of the first rectifier is connected to a cathode of the second rectifier. Within the snubber circuit an anode of the third rectifier is connected to anode of the second rectifier.

Within the snubber circuit a cathode of the third rectifier is connected to the second terminal and to a first terminal of the first capacitor. Within the snubber circuit a second terminal of the first capacitor is connected to the anode of the first rectifier. Within the snubber circuit a first terminal of the second capacitor is connected to the first terminal of the winding and a second terminal of the second capacitor is connected to the anode of the third rectifier.

**Fig. 2**

**Description**

FIELD OF INVENTION

The present subject matter relates to snubber circuit integrated for example within an inverting boost converter with coupled inductor. However the principle of the present subject matter may be adapted to other types of switch mode converters, for example forward or flyback.

Any transformer or coupled inductor based switch mode power supply has to deal with not-ideal components like transformers or coupled inductors. Among other things the later show more or less primary and secondary side leakage inductance. In switching applications these unwanted parasitic inductances can generate significant spikes and ringing at the primary and secondary side switch nodes.

The developer has to take care for this and usually needs to implement snubber circuitry to limit the negative effects of spikes and ringing which are stress of components and most likely Electromagnetic compatibility (EMC) issues.

For primary side snubbers low-loss circuitry (e.g. active clamp) is known but not for secondary side ones.

Purpose of this document is to introduce a low cost and effective low-loss secondary side snubber.

BACKGROUND

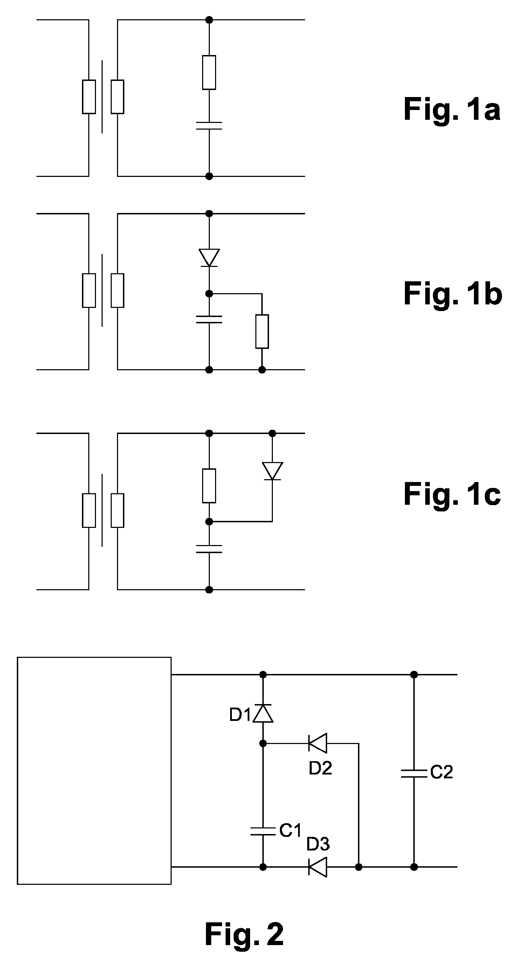

It is already known so called R-C snubber circuit presented figure 1-a, and two different types of R-C-D snubber circuits presented figure 1-b and figure 1-c. These snubber circuits are feasible and often used but highly dissipative, which heavily can degrade the efficiency of the whole circuitry.

SUMMARY

This summary is provided to introduce concepts related to snubber circuits.

In one embodiment, a snubber circuit is described. The snubber circuit is adapted to limit energy leaking from a first terminal and a second terminal of a winding, the snubber circuit comprising a first rectifier and a second rectifier and a third rectifier and a first capacitor and a second capacitor. Within the snubber circuit a cathode of first rectifier is connected to the first terminal. Within the snubber circuit an anode of the first rectifier is connected to a cathode of the second rectifier. Within the snubber circuit an anode of the third rectifier is connected to anode of the second rectifier. Within the snubber circuit a cathode of the third rectifier is connected to the second terminal and to a first terminal of the first capacitor. Within the snubber circuit a second terminal of the first capacitor is connected to the anode of the first rectifier. Within the snubber circuit a first terminal of the second capacitor is connected to the first terminal of the winding and a second terminal of the second capacitor is connected to the anode of the third rectifier.

In another embodiment, an electronic circuit is described. The electronic circuit comprises a snubber circuit connected to two terminals of the winding. The snubber circuit is adapted to limit energy leaking from a first terminal and a second terminal of a winding, the snubber circuit comprising a first rectifier and a second rectifier and a third rectifier and a first capacitor and a second capacitor. Within the snubber circuit a cathode of first rectifier is connected to the first terminal. Within the snubber circuit an anode of the first rectifier is connected to a cathode of the second rectifier. Within the snubber circuit an anode of the third rectifier is connected to anode of the second rectifier. Within the snubber circuit a cathode of the third rectifier is connected to the second terminal and to a first terminal of the first capacitor. Within the snubber circuit a second terminal of the first capacitor is connected to the anode of the first rectifier. Within the snubber circuit a first terminal of the second capacitor is connected to the first terminal of the winding and a second terminal of the second capacitor is connected to the anode of the third rectifier

BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1-a, 1-b and 1-c present embodiments of snubber circuits.

Figure 2 presents another embodiment of a snubber circuit, included secondary side rectifier D3 and output capacitor C2.

Figure 3 presents another embodiment of a snubber circuit, included secondary side rectifier D3 and output capacitor C2.

Figure 4 presents another embodiment of a snubber circuit connected to a coupled inductor with secondary side rectifier D3, output capacitor C2 and the load added.

The figure 5, 6 and 7 present different measurements made using circuitry according to the present divulgation.

The figure 8 presents another embodiment of a snubber circuit

The figure 9 presents another embodiment of a snubber circuit

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

DESCRIPTION OF EMBODIMENTS

An embodiment of the present subject matter is a snubber circuit. This snubber circuit is adapted to limit energy leaking from two terminals of a winding. By winding we mean a circuit comprising a wire or a conductor which constitutes a coil.

Within the present subject matter the circuitry with bothersome leakage is a converter with two sides, so called primary and secondary side. Each side is galvanically isolated of each other by use of a transformer or a coupled inductor. These components present the unwanted leakage inductances. In general one also could think about using the circuitry object of the present subject matter for a non-isolated type, e.g. a buck or step down converter. But here we don't have this type of leakage but only much lower parasitic inductances caused by e.g. the layout.

Figure 2 presents an snubber circuit of the present subject matter. This snubber circuit is adapted to limit energy leaking from a first terminal and a second terminal of a winding 201. The snubber circuit comprises

- a first rectifier D1 and a second rectifier D2 and a third rectifier D3 and
- a first capacitor C1 and a second capacitor C2

wherein a cathode of first rectifier D1 is connected to the first terminal

wherein an anode of the first rectifier D1 is connected to a cathode of the second rectifier D2

wherein an anode of the third rectifier D3 is connected to anode of the second rectifier D2

wherein a cathode of the third rectifier D3 is connected to the second terminal and to a first terminal of the first capacitor C1

wherein a second terminal of the first capacitor C1 is connected to the anode of the first rectifier D1

wherein a first terminal of the second capacitor C2 is connected to the first terminal of the winding and a second terminal of the second capacitor C2 is connected to the anode of the third rectifier D3.

In an embodiment the rectifier D3 can be obtain via different type of elements, for example diodes or field effect transistors (FET). The field effect transistor is more complex (additional driver circuitry is needed) but can increase system efficiency a lot. Especially for low output voltages (the diode losses are avoided). If the rectifier is a diode it could be for example silicium fast switching diode or a Schottky diode. The choice between these two types of diode depends on required blocking voltage. In all case the diode needs to be of fast diode type and capable to handle the output current for short periods. The rectifiers D1 or D2 could be a diode for example silicium fast switching diode or a Schottky diode.

In an embodiment of the present subject matter the first rectifier D1 is a fast switching silicium diode or a Schottky diode and/or

the second rectifier D2 is a fast switching silicium diode or a Schottky diode and/or

the third rectifier D3 is a fast switching silicium diode or a Schottky diode or a field effect transistor.

In an embodiment the first capacitor C1 is a film capacitor or a ceramic capacitor.

The capacitors, of the present subject matter, need to be a low ESR type and to be capable of handling pulse currents.

The capacitor C1 likely has a capacity in the nF (nano farad) range. When the leakage inductance ($L1$) of the choke is known, a first assumption of value of C1 can be to use formula:

$$\frac{1}{2} L1 * I0^2 = \frac{1}{2} C1 * dUC^2$$

Wherein $C1$ is the capacity of the first capacitor and $I0$ is the maximum output current of the winding (202) and $dUC$ the wanted first capacitor (C1) voltage and $L1$ is the leakage inductance of a coupled inductor of the winding (202). The value of this capacity must be finely tune by performing try and error.

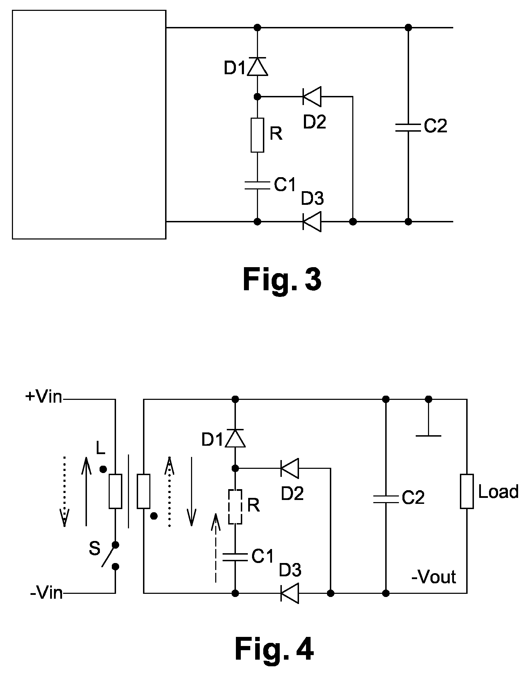

The figure 3 presents another embodiment of the present subject matter. In this embodiment the first terminal of the first capacitor C1 is connected to the cathode of the third diode D3 via a resistance R.

In an embodiment the resistance R is below 10 Ohm. The exact value of this resistance depends on what the expected performance of the snubber circuit, more precisely how much damping of remaining oscillation is wanted at the cost of efficiency loss. For example the value of the resistance R could be 1 ohm.

In an embodiment presented figure 4, the winding comprises a coupled inductor, the coupled inductor comprising a first and a second side and a switch configured to applied a voltage across the primary side of the coupled inductor when the switch is turn on, and wherein the snubber circuit is connected to the second side of the coupled inductor. In the figure 4 the dots closed to the coupled inductor represent the starting point of each winding. It is presupposed that the winding directions are identical. So this is also indication of voltage polarities that establish.

Compared to the snubber of the state of the art, the embodiments of the present subject matter heavily reduce spikes and ringing at the secondary side switch node. Furthermore the circuit efficiency is almost not compromised. Also these snubber circuits add only a minimal additional expenses indeed there is only two diodes plus a capacitor to add. Furthermore to the reduced peak to peak voltage a lower voltage rectifier diode could be used. This further could increase the total circuit efficiency and/or reduce costs.

In other words by using the circuit of the different embodiments, with primary switch S on, voltage Vin is applied across the primary side of the coupled inductor L. Accordingly (dotted arrows, the dots at the symbol for coupled inductor L define the winding orientation) an inverted voltage on the secondary side establishes. Rectifier diode D3 is blocking in this state and following energy is stored in coupled inductor L. When S is switched off, primary and secondary side voltage polarities reverse (BLACK arrows) and the stored energy is transferred to the secondary side of the converter (D3 now conducts). With next switching-on of S, secondary side leakage current (so the output current) doesn't have a path to go to and following will establish a high positive voltage pike at the cathode of D3. With the given circuitry (C1, R and D1) a path for this current is created. The leakage inductance caused current now flows thru these components charging C1 (dashed arrow), storing the leakage energy. Not considering reverse recovery times, D2 and D3 are blocking in this state. Referring to figure 1-b, for this operating state the proposed circuitry is quite similar. With next switching-off of S, when the voltages across the windings swap again, the stored energy in C1 is recovered via D2 as part of the output current and mostly not dissipated in a resistive element. You'll note the difference to circuitry according 1b) above, where this energy is burned. Obviously some losses of the small signal diodes D1 and D2 (with high peak current capability) need to be considered. R (drawn dashed) above is not needed mandatory but will damp remaining high frequency oscillations at the cost of some losses.

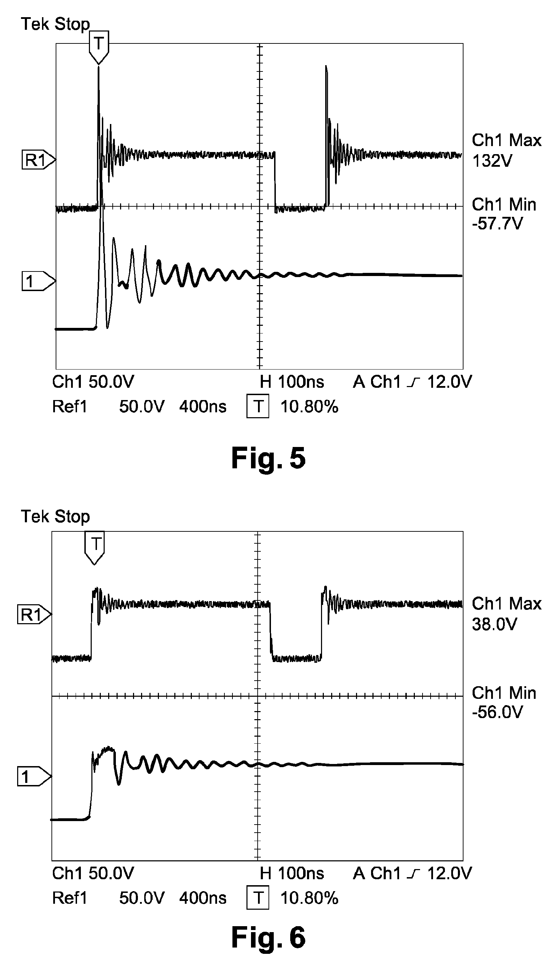

The figure 5, 6 and 7 present different measurements made using some of the circuits of the present divulgation. The input voltage is 5V, the output voltage is -52V, the output current is 0.6A, and the switching frequency is about 450kHz.

The figure 5 is a measurement made when no snubber circuit is used. This measurement presents high voltage spikes and heavy ringing.

The figure 6 is a measurement made using the snubber circuits of the figure 4, in this snubber circuits C1=2.2nF and is a type MLCC 100V capacitor and R=1$\Omega$ (1ohm). The diode D1 and D2 are BAS16H (silicon switching diode, case SOD-323, 100V, 6ns). In comparison with the measurement of figure 5, the voltage spikes are heavily reduced and ringing is damped.

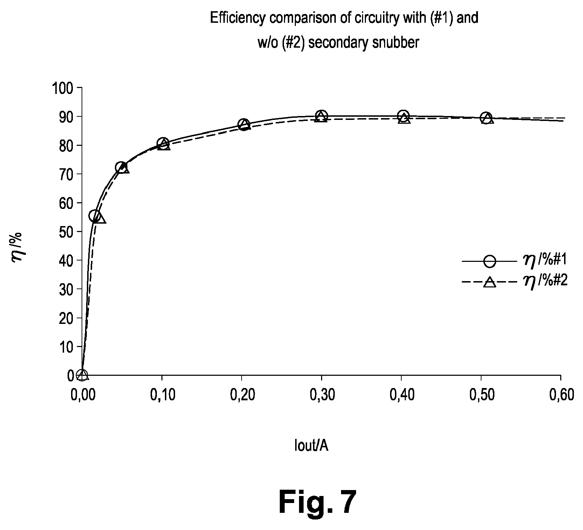

The figure 7 presents the comparison of the efficiency of an inverting boost converter with snubber circuit according to figure 4, measurement with the triangles, and an inverting boost converter without snubber circuit, measurement with the circles. This figure 7 highlights that there is no decrease of efficiency with the proposed snubber circuit of figure.

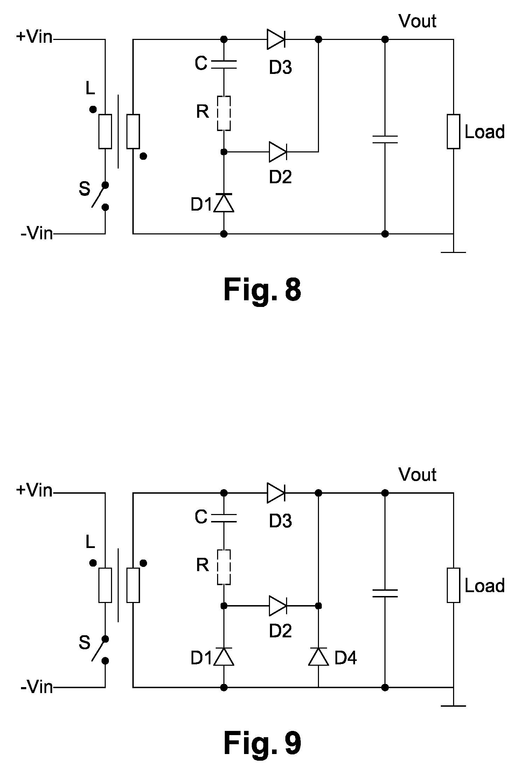

The figure 8 presents another embodiment of the present subject matter. Within this embodiment the snubber circuit is of the type non-inverting boost converter or isolated flyback.

The figure 9 presents another embodiment of the present subject matter. Within this embodiment the snubber circuit is of the type forward converter.

**Claims**

1. Snubber circuit, adapted to to limit energy leaking from a first terminal and a second terminal of a winding (201), the snubber circuit comprising

   • a first rectifier (D1) and a second rectifier (D2) and a third rectifier (D3) and
   • a first capacitor (C1) and a second capacitor (C2)

   wherein a cathode of first rectifier (D1) is connected to the first terminal
   wherein an anode of the first rectifier (D1) is connected to a cathode of the second rectifier (D2)
   wherein an anode of the third rectifier (D3) is connected to anode of the second rectifier (D2)
   wherein a cathode of the third rectifier (D3) is connected to the second terminal and to a first terminal of the first capacitor (C1)
   wherein a second terminal of the first capacitor (C1) is connected to the anode of the first rectifier (D1)
   wherein a first terminal of the second capacitor (C2) is connected to the first terminal of the winding (201) and a second terminal of the second capacitor (C2) is connected to the anode of the third rectifier (D3).

2. Snubber circuit according to claim 1 wherein, the first rectifier (D1) and/or the second rectifier (D2) and/or a diode.

3. Snubber circuit according to claim 1 wherin the first rectifier (D1) is a fast switching silicium diode or a Schottky diode and/or
   the second rectifier (D2) is a fast switching silicium diode or a Schottky diode and/or
   the third rectifier (D3) is a fast switching silicium diode or a Schottky diode or a field effect transistor.

4. Snubber circuit according to claim 1 wherein the first capacitor (C1) is a film capacitor or a ceramic capacitor and wherein the capacity of the first capacitor (C1) is obtained using the formula:

$$\frac{1}{2} L1 * I0^2 = \frac{1}{2} C1 * dUC^2$$

Wherein:

C1 is the capacity of the first capacitor and
I0 is the maximum output current of the winding (201) and
dUC the wanted first capacitor (C1) voltage and
L1 is the leakage inductance of a coupled inductor of the winding (201)

5. Snubber circuit according to any of the previous claims;
wherein the first terminal of the first capacitor (C1) is connected to the cathode of the third diode (D3) via a resistance (R)

6. Snubber circuit according to claim 4 wherein a value of the resistance (R) is below 10 ohm, more particularly the value is 1 ohm.

7. Electronic circuit comprising;
the snubber circuit according to any of the claims 1 to 6 connected to two terminals of the winding (201).

8. Electronic circuit according to claim 7 wherein the winding (201) comprises a coupled inductor, comprising a first and a second side
the winding also comprises a switch configured to applied a voltage across the primary side of the coupled inductor when the switch is turn on,
and wherein the snubber circuit is connected to the second side of the coupled inductor.

Fig. 1a

Fig. 1b

Fig. 1c

Fig. 2

**Fig. 3**

**Fig. 4**

Tek Stop

R1

Ch1 Max
132V

Ch1 Min
-57.7V

1

Ch1 50.0V       H 100ns      A Ch1 ⌐ 12.0V
Ref1    50.0V   400ns   T  10.80%

## Fig. 5

Tek Stop

R1

Ch1 Max
38.0V

Ch1 Min
-56.0V

1

Ch1 50.0V       H 100ns      A Ch1 ⌐ 12.0V
Ref1    50.0V   400ns   T  10.80%

## Fig. 6

Efficiency comparison of circuitry with (#1) and
w/o (#2) secondary snubber

Fig. 7

**Fig. 8**

**Fig. 9**

## EP 3 182 573 A1

**Europäisches Patentamt**
**European Patent Office**
**Office européen des brevets**

# EUROPEAN SEARCH REPORT

**Application Number**

EP 15 30 6998

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2010 088209 A (NICHICON CORP) 15 April 2010 (2010-04-15) | 1,2 | INV. H02M1/34 |
| Y | * abstract; figures 1-5 * | 3-8 | |
| Y | US 5 896 284 A (MURASATO MICHIHISA [JP] ET AL) 20 April 1999 (1999-04-20) * column 9, lines 46-50; figures 11-15 * * column 11, lines 43-53 * | 3-8 | |
| Y | US 2006/244428 A1 (JITARU IONEL D [US] ET AL) 2 November 2006 (2006-11-02) * paragraphs [0007], [0033]; figures 7-15 * | 3-8 | |
| Y | JP 2013 027096 A (MURATA MANUFACTURING CO) 4 February 2013 (2013-02-04) * paragraph [0023]; figures 1-3 * | 4 | |

**TECHNICAL FIELDS SEARCHED (IPC)**

H02M

The present search report has been drawn up for all claims

| Place of search | Date of completion of the search | Examiner |
|---|---|---|
| The Hague | 20 May 2016 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 6998

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2016

| Patent document cited in search report | | Publication date | Patent family member(s) | | Publication date |
|---|---|---|---|---|---|
| JP 2010088209 | A | 15-04-2010 | JP | 5116160 B2 | 09-01-2013 |
| | | | JP | 2010088209 A | 15-04-2010 |
| US 5896284 | A | 20-04-1999 | JP | H0956150 A | 25-02-1997 |
| | | | US | 5896284 A | 20-04-1999 |
| US 2006244428 | A1 | 02-11-2006 | AT | 508512 T | 15-05-2011 |
| | | | US | 2006244428 A1 | 02-11-2006 |
| | | | WO | 2004073132 A1 | 26-08-2004 |
| JP 2013027096 | A | 04-02-2013 | NONE | | |

EPO FORM P0459

For more details about this annex : see Official Journal of the European Patent Office, No. 12/82